Europäisches Patentamt

European Patent Office

Office européen des brevets

(19)

(11) Veröffentlichungsnummer: **0 355 854**
**A1**

(12) # EUROPÄISCHE PATENTANMELDUNG

(21) Anmeldenummer: 89115818.0

(22) Anmeldetag: 28.08.89

(51) Int. Cl.⁴: **H01M 2/10 , //B65D25/22**

(30) Priorität: 26.08.88 DE 8810822 U
21.12.88 DE 8815852 U
16.01.89 DE 8900411 U
03.04.89 DE 8904080 U

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **KUNSTSTOFFWERK THERMOPLAST N. & R. BAWART**
**Traunauweg 22**
**A-4030 Linz(AT)**

(72) Erfinder: **Bawart, Norbert**
**Alpenblickstrasse 11**
**A-4060 Leonding(AT)**
Erfinder: **Krabiell, Dieter**
**Eschenbachstrasse 23**
**A-4600 Wels(AT)**

(74) Vertreter: **Dupal, Helmut, Dipl-Ing.**
**Jägerweg 12**
**A-4702 Wallern(AT)**

(54) **Trageschnur mit Traggriff.**

(57) Trageschnur (1) mit Traggriff (3), für schwere Behälter (49), wie elektrische Batteriekästen, die an ihren gegenüberliegenden Seiten mit je wenigstens einer Tragbohrung (48) versehen sind, durch die die Trageschnur (1), mit einem Klöppel (2) als Verdikkung an wenigstens einem freien Ende (5) versehen, hindurchgeführt ist, der zur Befestigung in einer Aufnahme (4) des Traggriffes (3), unter Bildung einer, zumindestens während der Ausübung einer Zugkraft auf die Trageschnur (1), gegen Öffnen gesicherten Tragschlaufe eingelegt ist, wobei die aus einer Eintiefung (21, 21') für den Klöppel (2), deren Längserstrekkung (31) mindestens der Länge (13) des Klöppels (2) entspricht und aus einer in Längsrichtung (18) des Traggriffes (3) an diese anschließende Ausnehmung (19) für die Trageschnur (1) besteht, zwischen denen eine Stützkante (6) für den Klöppel gebildet ist, wobei die Stützkante (6) quer zur Längsrichtung (18) des Traggriffes (3) verlaufend, von deren tiefster Stelle bis zu ihren Enden (17) wenigstens den Durchmesser des Klöppels (2) überschreitend oder zusammen mit wenigstens einer weiteren Stützkante oder Haltekante (9) oder Stützfläche (47), die Befestigung des Klöppels (2) in der Aufnahme (4) gegen Öffnen sichert.

Fig. 9

Schnitt V-V

## Trageschnur mit Traggriff

Die Erfindung betrifft eine Trageschnur mit Traggriff nach dem Oberbegriff des Anspruches 1. Trageschnüre dieser Art werden zumeist zusammen mit einem Tragegriff verwendet, um schwere Behälter, wie elektrische Batteriekästen oder dergleichen heb- und tragbar zu machen. Sie werden an den Batteriekästen montiert, indem die Trageschnur durch Tragbohrungen hindurchgezogen und mit dem Traggriff gegen Lösen unter Zugkraft fest verbunden wird.

Bei einer bekannten Trageschnur ist die, aus thermoplastischem Material geflochtene Schnur an ihren freien Enden mit aus thermoplastischem Material umspritzen Klöppeln versehen, die durch je eine, quer zur Längsrichtung in einem Traggriff, aus thermoplastischem Material, angeordnete Öffnung hindurchgeschoben und dann seitlich versetzt werden, sodaß die Klöppel über eine Ausnehmung gelangen, die sie bei Zurückziehen der Tragschnur aufnimmt, wobei sie an einem Absatz zur Anlage kommen, durch den die Trageschnur hindurchgeführt werden kann, die Klöppel aber zurückgehalten werden.

Wegen des engeren Abmessungsspielraumes für Tragschnur und Klöppeln und der knappen Abmessungen für die Aufnahme, in die Klöppel und Tragschnur eingelegt werden, kann bei schrägem Zug die Trageschnur mitsamt dem Klöppel aus der Ausnehmung herausgezogen werden, besonders dann, wenn dieser nicht vollständig eingelegt ist, wodurch ein Unfall verursacht werden kann.

Aus der DEAS 2716293 ist eine Tragekordel für Batteriebehälter bekannt, bei der die Trageschnur an den freien Enden mit einer Verdickung in Form eines zylindrischen Klöppels versehen ist und mittig mit einem Traggriff umspritzt ist.

Für die Verwendung der Tragekordel mit dem Batteriebehälter ist eine besondere Ausbildung der Tragbohrung am Behälter erforderlich, denen Durchgangslöcher zum Durchfädeln der Kordel vorgeordnet sind, denen wiederum Haltelöcher für die Klöppel nachgeschaltet sind, die geringeren Durchmesser aufweisen und die mit, gegen die Zugrichtung an der Kordel versetzten Einführungslöchern, durch die die verdickten Enden der Tragekordel eingefädelt werden, über Schlitze verbunden sind und an denen sich die verdickten Enden der Trageschnur abstützen, nachdem die Schnur vorher in die Gegenrichtung um Kanten an der Seite der Batterie herumgeführt ist.

Diese Anordnung ist sicher gegen das Ausreißen der Trageschnur, aber verteuert die Herstellung des Behälters durch den komplizierten Bau, schwächt die Tragekordel durch das Führen über Kanten und ist aufwendig bei der Montage.

Eine einfachere Konstruktion zeigt die ATPS 315 268, bei der Einführungslöcher am Batteriebehälter fehlen und die Haltelöcher als offene Löcher mit einem Schlitz zum Eintreifeln der Schnüre ausgebildet sind.

Die Trageschnur wird wie bereits oben beschrieben um Kanten herumgelegt, sodaß diesbezüglich die gleichen Vorbehalte gelten.

Dazu kommt die Verringerung der Festigkeit der Haltelöcher durch die vorgesehenen Schlitze.

Bei allen diesen Ausführungsformen ist die Häufigkeit mit der eine Trageschnur mit einem Klöppel fehlerhaft eingelegt wird davon abhängig, mit welcher Sorgfalt das Einlegen geschehen muß, damit eine sichere Verriegelung erreicht wird, aber auch davon, welche und wieviele Handgriffe dafür notwendig sind.

So muß bei einer bekannten Ausführungsform die Trageschnur mit dem Klöppel durch eine Bohrung der Verriegelung gefädelt und losgelassen und das eingefädelte Ende nochmals ergriffen werden, bevor das Verriegeln vorgenommen werden kann, wodurch infolge der größeren Hast mit der die Handgriffe ausgeführt werden eine höhere Fehlerhaftigkeit aufritt.

Der Erfolg der ausgeführten Handgriffe kann überdies erst nach Ausübung eines Zuges auf die Trageschnur festgestellt werden, was in der Eile leicht vergessen wird.

Aufgabe der Erfindung ist es, eine Trageschnur mit Traggriff für schwere Behälter, wie elektrische Batteriekästen, mit einer einfach herstellbaren Formgebung auszubilden, bei der die Verbindung von Trageschnur und Traggriff schnell, einfach und verläßlich gegen ungewolltes Öffnen herstellbar ist, mit der eine, mit dem schweren Behälter sicher verbundene Tragschlaufe gebildet wird, die keiner besonderen Vorrichtungen an dem Behälter für die Befestigung der Trageschnur bedarf.

Diese Aufgabe wird bei einer Trageschnur der eingangs genannten Gattung mit den Merkmalen des kennzeichnenden Teils des Anspruches 1 gelöst.

Durch die Ausbildung und Anordnung der Ausnehmung und der Eintiefung der Aufnahme für den Klöppel und die Trageschnur, sowie ihre Bemessungen im Verhältnis zueinander und zu Klöppel und Trageschnur, ist die einfache und rasche Herstellung einer verläßlichen Verbindung zwischen Trageschnur und Traggriff jeweils mit nur einem Handhabungsgriff für eine Befestigung möglich, wobei die hergestellte Verbindung gleichzeitig auf ihre Tauglichkeit überprüft wird, ohne daß die Trageschnur selbst durch Klemmen oder Einspannen geschwächt wird. Überdies sind alle Elemente der Verbindung durch Spritzgußverfahren mit einfachen Werkzeugen herstellbar.

Darüber hinaus ist die Herstellung der Verbindung zwischen Trageschnur und Traggriff sehr einfach und kann ohne aufwendige Handhabungsschritte auch wieder geöffnet werden, wenn keine Zugkraft auf die Verbindung einwirkt.

Die Unteransprüche, auf die hier als Teil der Beschreibung ausdrücklich verwiesen wird, betreffen besonders vorteilhafte Ausführungsformen und Ausgestaltungsmöglichkeiten der Erfindung.

Für die Belastbarkeit der Trageschnur ist es wichtig, wenn die Stützkante senkrecht zur Zugrichtung ausgerichtet ist, also bei Lage der Trageschnur in der Ausnehmung in Längsrichtung des Traggriffes senkrecht zu dieser.

Eine besonders sichere und für die Einleitung der Zugkraft günstige Anordnung ergibt sich, wenn der Klöppel mit der Endfläche an seinem inneren, der Trageschnur zugewendeten Ende an einer Stützkante gehalten ist, die über den Durchmesser des Klöppels hinaus bis an die Oberseite des Traggriffes reicht, weil dadurch ein seitlicher Zug auf die Trageschnur und auf ihre Verbindung mit dem Klöppel weitgehend vermieden wird und der Zug über eine genügend große Stützfläche verteilt abgestützt ist.

Dabei ist es von besonderem Vorteil, wenn die Eintiefung eine Längserstreckung aufweist die größer ist als die Länge des Klöppels, wodurch dessen Anordnung in Längsrichtung des Traggriffes möglich ist und wenn die Quererstreckung der Eintiefung ebenfalls die Länge des Klöppels übersteigt oder an der Unterseite des Traggriffes gegenüber der Einführungsöffnung offen ist, damit das Einführen des Klöppels unbehindert geschehen kann.

Besonders einfach herzustellen und bei der Herstellung einer Verbindung zwischen Traggriff und Trageschnur einfach und sicher handzuhaben sind diese Teile, wenn die Länge der Aufnahme einem Mehrfachen des Durchmessers der Trageschnur ent spricht und eine zylindrische untere Wandung und ebene Seitenwände aufweist, die an die Form der Trageschnur angepaßt sind. Für das sichere Festhalten des Klöppels an der Stützkante und das sichere Abstützen an der Stützfläche ist es, besonders wenn diese nicht federnd gelagert sind wichtig, daß die Ausnehmung eine Länge aufweist, bei der die Auswirkung eines Schrägzuges auf die Trageschnur begrenzt ist und das Herausziehen des Klöppels aus der verriegelten Stellung in der Eintiefung unmöglich ist.

Im Bereich der unteren Wandung der Ausnehmung ist es mit Vorteil möglich Material einzusparen ohne Festigkeit und damit Sicherheit aufzugeben, wenn die untere Wandung auf zwei Stege an ihren beiden Enden beschränkt wird.

Die Einführung des Klöppels in die Aufnahme wird durch eine schräge Übergangsfläche zwischen der oberen Wandung der Ausnehmung und der Eintiefung erleichtert, die quer zur Längsrichtung des Traggriffes gerundet ist.

Besonders einfach für die Herstellung eines Traggriffes ist es, wenn die Ausnehmung mit der zugeordneten Wand der Eintiefung die Stützkante für den Klöppel bildet, wodurch sich die Festlegung des Klöppels besonders einfach gestaltet.

Durch die Anordnung der Haltekanten und der Einführungsöffnung für den Klöppel ist es möglich, auch die Eintiefung der Aufnahme von der Oberseite des Traggriffes her einzuarbeiten, wodurch nicht nur die Herstellung wesentlich vereinfacht wird, sondern auch das Einführen und Verriegeln, sowie das Einlegen der Trageschnur einfacher schneller und zuverlässiger möglich.

Die Ausnutzung der Längserstreckung ist dadurch möglich, daß die Einführungsöffnung für den Klöppel unmittelbar an die Haltekanten anschließt.

Die Einführung des Klöppels in die Eintiefung wird sehr erleichtert, wenn die Einführungsöffnung unter einem ausreichenden spitzen Winkel zur Längsrichtung des Traggriffes, bis zu einem rechten Winkel geneigt verläuft, weil dann die Trageschnur beim Einführen des Klöppels weniger abgebogen werden muß; überdies ist dann einfacher, die Stützkante für den Klöppel unter einem günstigeren, kleineren Winkel zur Längsrichtung des Traggriffes anzubringen.

Die Sicherheit der Verriegelung des Klöppels wird weiter besonders dadurch gesteigert, daß sich an die Enden der Stützkante beiderseits Haltekanten für den Klöppel unter einem Winkel zu dieser anschließen, der ebenso wie der Verlauf der Stütz- und Haltekanten an die Gestalt des Klöppels angepaßt ist.

Für die Sicherheit der Verriegelung des Klöppels ist es überdies von Vorteil, wenn die Haltekanten eine genügende Länge aufweisen die zwischen einem Drittel und der Länge des Klöppels liegen soll.

Zur Absicherung der Verriegelung des Klöppels im Traggriff ist es günstig, wenn die Trageschnur unmittelbar anschließend an die Stützkante eingeklemmt wird, um das Herausgleiten aus der Ausnehmung auch bei sehr ungünstiger Zugrichtung zu behindern.

Besonders vorteilhaft für das sichere Halten der Verbindung ist es, wenn an der Öffnung der Ausnehmung der Aufnahme eine, senkrecht zur Längsrichtung des Traggriffes verlaufende, halboffene Nut für das Einlegen der Trageschnur eingearbeitet ist, deren seitliche, äußere Verengung das ungewollte Herausgleiten der Trageschnur verhindert.

Um bei der Umlenkung der Trageschnur zu enge Krümmungen zu vermeiden, ist zwischen der Nut und der unteren Wandung der Ausnehmung vorteilhafter Weise eine gerundete Übergangsfläche angebracht, an die sich die in die Nut eingelegt Trageschnur ebenso, wie an der unteren Wandung der Ausnehmung und an der Übergangsfläche eng anlegt und damit ihre Lage und die des Klöppels eindeutig festlegt.

Durch diese Art der Abstützung des Klöppels in einer Aufnahme eines Traggriffes, wird die Trageschnur selbst nicht durch Klemmen oder Einspannen geschwächt, sondern die Zugkraft wird von der Trageschnur auf den Klöppel vollständig symmetrisch und gleichmäßig übertragen.

Eine besonders sichere und für die Einleitung der Zugkraft günstige Anordnung ergibt sich, wenn der KLöppel mit der Endfläche an seinem inneren, der Trageschnur zugewandeten Ende an einer Stützkante und mit der zylindrischen Mantelfläche am äußeren Ende des Klöppels, an einer Stützfläche der Aufnahme gehalten ist, sodaß kein seitlicher Zug auf die Trageschnur und ihre Verbindung mit dem Klöppel auftreten kann und dieser über eine genügend große Stützfläche für die feste Verbindung zwischen Trageschnur und Traggriff verfügt.

Die Ausbildung der Aufnahme mit einer Ausnehmung in Form einer Bohrung, in Längsrichtung des Traggriffes, die in eine von dessen Unterseite her eingearbeitete Eintiefung mündet, ermöglicht ein einfaches und sichers Einführen des Klöppels durch das Einschieben des Klöppels bis in die Eintiefung und dessen Abstützen an einer Stützkante durch Ausübung einer Zugkraft auf die Trageschnur.

Die Anpassung der Ausnehmung an die Abmessungen des Klöppels erleichtert ebenso dessen Einführen in die Eintiefung, wie die zylindrische Gestaltung der oberen und der unteren Wandung der Ausnehmung, angepaßt an den Klöppel.

Durch die Zwischenschaltung von ebenen, parallelen Seitenwandungen zwischen der unteren und der oberen Wandung der Ausnehmung, wobei sie sich an die untere Wandung anschließen und an der oberen Wandung enden, ergibt sich eine verlängerte Stützkante und dadurch eine große Abstützungsfläche für den Klöppel und damit eine besonders große Sicherheit für die Verbindung von Trageschnur und Traggriff.

In besonders einfacher Weise wird zwischen Ausnehmung und Eintiefung, mit der Wand der Eintiefung, die dem Ende des Traggriffes zugewendet ist, eine an den Umfang des Klöppels angepaßte Stützkante gebildet, die zur Unterseite des Traggriffes gerichtet ist und die ein einfaches und haltbares Verriegeln, aber auch das Lösen der Verriegelung bei Bedarf erlaubt.

An dieser Stützkante kann sich der Klöppel nach dem Hineinschieben durch die Ausnehmung bis in die Eintiefung, an Stützkante und Stützfläche anlegen und damit verriegeln.

Für die wirksame Abstützung eines Klöppels in einer Aufnahme des Traggriffes ist es wesentlich, einen hinreichenden Abstand zwischen Stützkanten und Stützflächen der Aufnahme vorzusehen, die an die Länge des Klöppels angepaßt ist und bei der die Länge der Ausnehmung der Aufnahme die mögliche Abweichung der Zugrichtung von der Längsrichtung des Traggriffes begrenzt, sodaß das Herausgleiten des Klöppels aus der einmal hergestellten Verbindung nicht mehr möglich ist.

Die Anordnung der Stützfläche als Innenfläche der Eintiefung ermöglich eine einfache Verriegelung des Klöppels in der Aufnahme dadurch, daß sich dieser an diese anlegt und in gerader Lage, in Längsrichtung des Traggriffes an der Stützkante gehalten ist.

Die Verriegelung des Klöppels wird besonders gut dadurch abgesichert, daß die Stützfläche für den Klöppel an einem quer zur Längsrichtung des Traggriffes federnden Teil, wobei zwischen der Stützfläche und der Stützkante an der Ausnehmung eine Durchtrittsöffnung für den Klöppel freigelassen ist, die quer zur Längsrichtung des Traggriffes geringer gehalten ist, als der Durchmesser des Klöppels.

Durch diese Maßnahme wird beim Hineinschieben des Klöppels in die Eintiefung das federnde Teil gegen Federkraft hochgeshoben und kehrt in seine Ausgangslage zurück, sobald der Klöppel vollständig in die Eintiefung geschoben ist, wodurch dieser in Richtung zur Unterseite des Traggriffes und damit in den Bereich der Stützkante gedrängt wird.

Besonders günstig ist es, wenn auch die Übergangsfläche an dem federnden Teil angebracht ist, weil dadurch die Einführung des Klöppels in die Eintiefung leichter von statten geht und die Gestaltung der Durchtrittsöffnung für den Klöppel besser auf diesen abgestimmt werden kann.

Sehr vorteilhaft ist es, das federnde Teil als federnde Zunge auszubilden, bei der die Durchtrittsöffnung für den Klöppel beim zurückweichen der federnden Zunge am Besten an die Abmessungen des Klöppels anpaßbar ist.

Dabei ist es sehr günstig, wenn die federnde Zunge an ihrem, zu dem Ende des Traggriffes hin gerichteten Ende fest angebracht und mit ihrem gegenüberligenden freigestellten Ende frei beweglich angeordnet ist.

Eine besonders einfach herstellbare Ausführungsform, die besonders große Zuverlässigkeit aufweist, wird erhalten, wenn die federnde Zunge aus dem Material des Traggriffes selbst herausgearbeitet ist, indem die Eintiefung mit einem Schlitz bis an die Oberseite des Traggriffes hindurchreicht, so daß die federnde Zunge an drei Seiten freigestellt ist.

Die Funktion der federnden Zunge wird weiter verbessert, wenn deren seitliche Freistellung reicht, die bis in eine Ebene, die durch die Wand der Eintiefung geht, die dem zugeordneten Ende des Traggriffes zugewandt ist.

Die Einführung des Klöppels wird weiter verbessert, wenn die obere Wandung der Ausnehmung des Traggriffes in die Eintiefung hineinreichend an die Übergangsfläche anschließt.

Durch diese Anordnung der Durchführung und der Teile der Aufnahme für den Klöppel und die Trageschnur, sowie ihre Bemessungen im Verhältnis zueinander und zu Klöppel und Trageschnur, ist die einfache und rasche Herstellung einer verläßlichen Verbindung zwischen Trageschnur und Traggriff möglich und die Trageschnur selbst nicht durch Klemmen oder Einspannen geschwächt. Überdies sind alle Elemente der Verbindung durch Spritzgußverfahren mit einfachen Werkzeugen herstellbar.

Für die rasche, einfache und zuverlässige Handhabung ist es von Vorteil, die Durchführung für die Trageschnur vom Ende des Traggriffes her nach oben und innen zu anzuordnen, wobei gleichzeitig übermäßige Biegung der Trageschnur vermeidbar ist.

Zur Sicherung gegen ungewolltes öffnen der Tragschlaufe ist es günstig, wenn die obere Begrenzung der Ausnehmung für die Trageschnur mit der obersten Stelle der Öffnung der Durchführung am Ende des Traggriffes zukammenfällt, wodurch ein herausziehen nach oben hin unmöglich ist.

Für die Führung der Trageschnur und die sichere Abstützung des Klöppels ist es von Vorteil, die Durchführung so zu legen, daß die Stützkante und die untere Wandung der Ausnehmung von ihr nicht berührt werden, um die Trageschnur und die Festigkeit der Tragschlaufe nicht zu mindern, wobei Stege des Traggriffmaterials möglichst großen Querschnitt erhalten sollen, damit die Festigleit des Traggriffes nicht unnötig verringert wird.

Eine besonders einfach herstellbare und zugfeste Verbindung erhält man durch Anwendung von zwei Aufnahmen an jedem Traggriff und zwei Klöppel an jeder Trageschnur, die zum Herstellen einer Verbindung in diesen Aufnahmen vorgesehen sind.

Eine besonders einfach herstellbare und zugfeste Verbindung erhält man durch Anwendung von zwei Aufnahmen an jedem Trag griff und zwei Klöppel an jeder Trageschnur, die zum Herstellen einer Verbindung in diesen Aufnahmen vorgesehen sind.

Für das Ergreifen des Traggriffes ist es besonders beim Tragen eines schweren Behälters vorteilhaft, wenn für die Finger Einbuchtungen vorgesehen sind.

Besonders vorteilhaft ist es, wenn die mittlere Einbuchtung symmetrisch am Traggriff angeordnet ist und tiefer ist, als die äußeren Einbuchtungen und sich für die Montage durch einen Roboter eignet.

Für die Herstellung ist es günstig einen Traggriff aus thermoplastischem Material zu verwenden der gleichzeitig mit den Klöppeln in einem Arbeitsgang herstellbar ist.

Besonders bei der Verwendung der Trageschnur an genormten Tragbohrungen eines schweren Behälters bzw. Batteriekastens ist es, zur Ausnutzung des zur Verfügung stehenden Bohrungsquerschnittes und damit des entsprechenden Materialquerschnittes des Klöppels von Vorteil, dem Klöppel einen kreisförmigen und unter Berücksichtigung der, vom Ende der Trageschnur eingenommenen Querschnittsfläche, einen kreisringförmigen Querschnitt zu geben, wobei der Klöppel rohrförmig gestaltet ist und zur haltbaren Verbindung mit der Trageschnur eine Länge aufweist, die größer ist, als der Durchmesser des Klöppels.

Zum einfacheren Einfädeln des Klöppels durch eine Tragbohrung oder in eine Aufnahme kann es sich vorteilhaft erweisen diesem eine kegelstumpfförmige Gestalt zu geben deren Basis der Trageschnur zugewendet ist.

Eine besonders sichere und für die Einleitung der Zugkraft günstige Anordnung ergibt sich, wenn der KLöppel mit der Endfläche an seinem inneren, der Trageschnur zugewendeten Ende an einer Stützkante gehalten ist, sodaß seitlicher Zug auf die Trageschnur und ihre Verbindung mit dem Klöppel weitgehend ver mieden wird und der Zug über eine genügend große Stützfläche verteilt abgestützt ist.

Die Belastung der Trageschnur, des Traggriffes und der Haltevorrichtung am Batteriekasten ist besonders gut aufgeteilt, wenn an jeder Seite zwei oder mehrere Tragbohrungen vorgesehen sind.

Für die Herstellung der Trageschnur ist die Verwendung von geflochtener Schnur die nicht aufdrüselt besonders vorteilhaft, die aus Polypropylen besteht und mit Klöppeln aus thermoplastischem Material genügender Festigkeit umspritzt wird.

Für eine störungsfreie Verwendung der Trageschnur mit dem Traggriff ist es wichtig, daß je zwei Traggriffe mit den zugehörigen Trageschnüren und dem elektrischen Batteriekasten jeweils eine trag- und hebbare Einheit bilden.

Eine besonders sparsame Anordnung in Bezug auf die Trageschnur ergibt sich, wenn diese geteilt und an den freien Enden mit Klöppeln größeren Durchmessers versehen ist, sodaß sie beim Einfädeln der Trageschnur in eine Tragbohrung an dieser zur Anlage kommen und eine auf Zug belastbare Verbindung zwischen Trageschnur und Batteriekasten herstellen.

Die Erfindung wird nach nachstehend anhand der Zeichnung mehrerer Ausführungsformen der Erfindung beschrieben, dabei zeigt:

Fig. 1 einen Traggriff mit einer Eintiefung und einer Ausnehmung der Aufnahme, von der Oberseite des Traggriffes her eingearbeitet, mit senkrechter Einführungsöffnung, in Seitenansicht, teilweise geschnitten nach I - I, die Trageschnur mit Klöppel angedeutet,

Fig. 2 den Traggriff nach Fig.1,von unten gesehen, in Ansicht A, die Trageschnur weggelassen,

Fig. 3 den Traggriff nach Fig.1, von oben gesehen, in Ansicht B, teilweise geschnitten nach II - II, Trageschnur und Klöppel weggelassen,

Fig. 4 den Traggriff nach Fig.1, von der Stirnseite gesehen, in Ansicht C, die Trageschnur geschnitten angedeutet,

Fig. 5 einen Traggriff mit einer Eintiefung und einer Ausnehmung der Aufnahme, von der Oberseite her eingearbeitet, mit schräger Einführungsöffnung, in Seitenansicht, teilweise geschnitten nach III - III, Trageschnur und Klöppel angedeutet,

Fig. 6 den Traggriff nach Fig.6, von unten gesehen, in Ansicht E, die Trageschnur weggelassen,

Fig. 7 den Traggriff nach Fig.6, von oben gesehen, in Ansicht D, teilweise geschnitten nach IV - IV, Trageschnur und Klöppel weggelassen,

Fig. 8 Traggriff nach Fig.6, von der Stirnseite gesehen, in Ansicht F, die Trageschnur geschnitten angedeutet,

Fig. 9 eine Trageschnur, an einem Traggriff mit einer Eintiefung von der Oberseite und einer Ausnehmung von dem Ende des Traggriffes her eingearbeitet und eine Haltevorrichtung an einem Batteriekasten in Seitenansicht, teilweise geschnitten, nach V - V,

Fig.10 den Traggriff nach Fig.9, von unten gesehen in Ansicht G, die Trageschnur weggelassen,

Fig.11 den Traggriff nach Fig.9, von der Seite gesehen in Ansicht H, die Trageschnur in der Ausnehmung der Aufnahme abgeschnitten,

Fig.12 einen Teil einer geteilten Trageschnur mit einem Klöppel größeren Durchmesser, an einer Haltebohrung, im Schnitt,

Fig.13 das Ende einer Trageschnur mit einem Klöppel mit kegelstumpfförmigem Umriß,

Fig.14 eine zweite Ausführungsform eines Traggriffes mit der Eintiefung von der Oberseite und einer Ausnehmung vom Ende des Traggriffes her eingearbeitet, in Seitenansicht, teilweise geschnitten nach VI - VI, mit angedeutem Klöppel,

Fig.15 den Traggriff nach Fig.14 von unten gesehen in Ansicht J,

Fig.16 den Traggriff nach Fig.14 von oben gesehen in Ansicht K, teilweise geschnitten nach VII - VII,

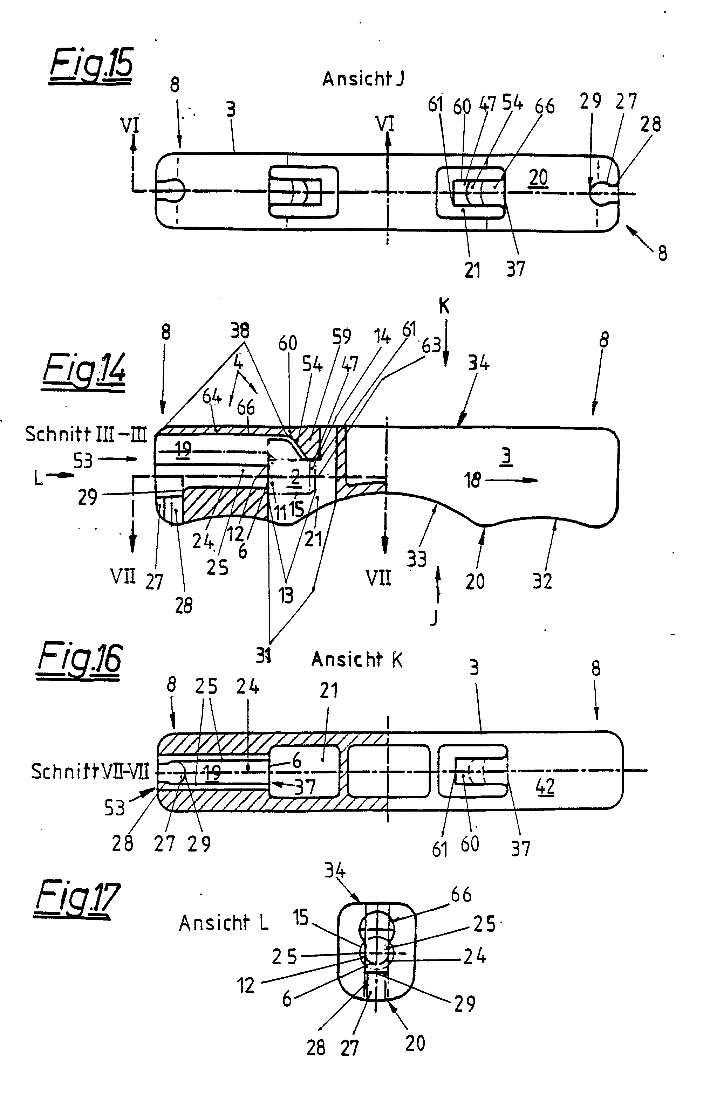

Fig.17 den Traggriff nach Fig.14 von einer Stirnseite gesehen, in Ansicht L, den Klöppel angedeutet,

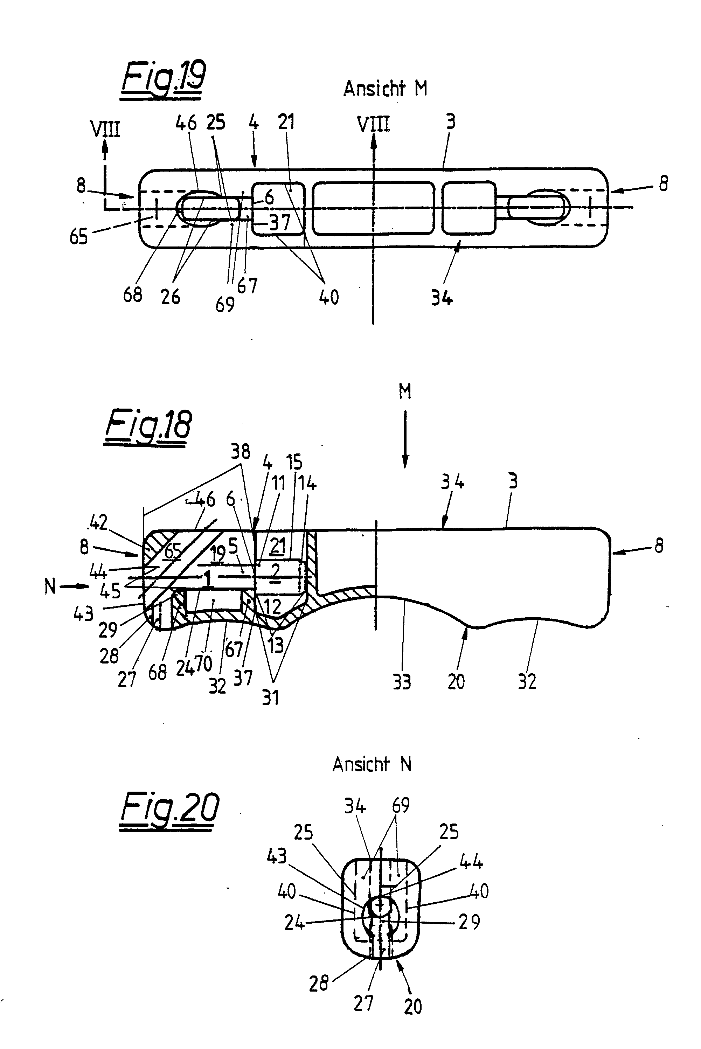

Fig.18 ein Traggriff mit einer Eintiefung von der Oberseite und einer Ausnehmung der Aufnahme, teilweise vom Ende des Traggriffes her eingearbeitet, in Seitenansicht, teilweise geschnitten nach VIII - VIII, und die Trageschnur mit Klöppel angedeutet,

Fig.19 den Traggriff nach Fig.18, von oben gesehen, in Ansicht M, die Trageschnur weggelassen,

Fig.20 den Traggriff nach Fig.18, von der Stirnseite gesehen, in Ansicht N, die Trageschnur weggelassen.

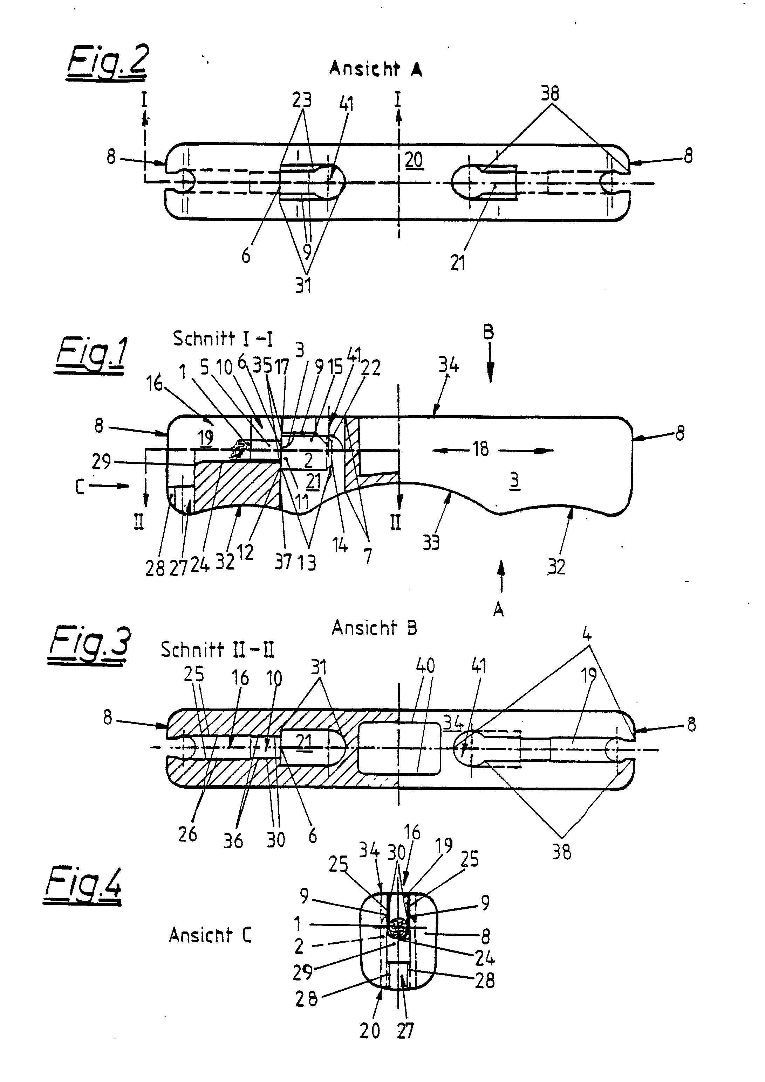

Der in Fig. 1 bis 4 dargestellte Traggriff 3 betrifft eine der beschriebenen Ausführungsformen mit der Eintiefung 21 und der Ausnehmung 19 der Aufnahme 4 von der Oberseite 34 des Traggriffes 3 her eingearbeitet.

In den Traggriff 3 sind von den stirnseitigen Enden 8 her Aufnahmen 4 eingearbeitet, die jeweils aus einer in Längsrichtung 18 des Traggriffes 3 verlaufenden Ausnehmung 19 mit einer zylindrischen unteren Wandung 24, deren Durchmesser an den Durchmesser der Trageschnur angepaßt ist und seitlich anschließenden, parallelen, ebenen Seitenwänden 25 in einem Abstand 26, entsprechend dem Durchmesser der Trageschnur 1 und aus einer Eintiefung 21 für einen Klöppel 2, in die die Ausnehmung 19 mündet, besteht.

Die Eintiefung 21 weist eine von der Oberseite 34 des Traggriffes her eingearbeitete Einführungsöffnung 41 für den Klöppel 2 auf, die senkrecht zur Längsrichtung 18 des Traggriffes 3 verläuft und an den kreisförmigen Querschnitt des Klöppels 2 angepaßt ist.
An die Einführungsöffnung 41 schließen die ebenen Seitenwände 25 der Ausnehmung 19 bis zum Ende 8 des Traggriffes 3 an.

Die untere Wandung 24 und die ebenen Seitenwände 25 der Ausnehmung 19 bilden mit der zum Ende 8 des Traggriffes hin zwischen Seitenwänden 40 angeordneten Wand 37 der Eintiefung 21 eine Stützkante 6 an der sich die Endfläche 12 des inneren, der Tragschnur 1 zugewandten Ende 11 des Klöppels 2 abstützt.

Die Stützkante 6 verläuft von der unteren Wandung 24 senkrecht zur Längsrichtung 18 des Traggriffes 3 nach oben, wo an ihren Enden 17 Haltekanten 9 unter einem Winkel 39 senkrecht dazu, also in Längsrichtung 18 des Traggriffes 3 anschließen, die an der Einführungsöffnung 41 enden.

Der Abstand 35 zwischen der tiefsten Stelle der Stützkante 6 und deren Enden 17 enspricht im wesentlichen dem Durchmesser des Klöppels 2.

Die Eintiefung 21 ist zur Unterseite 20 des Traggriffes 3 hin vollständig offen, damit die Einführung des Klöppels 2 durch die Einführungsöffnung 41 nicht durch eine zu geringe Quererstreckung 7 der Eintiefung 21 behindert ist.

Die Längserstreckung 31 der Eintiefung 21 ist angepaßt an die Länge 13 des Klöppels 2 etwas größer als diese, damit das Festlegen des Klöppels 2 an der Stützkante 6 ohne Schwierigkeiten von statten gehen kann.

Beim Einführen der Trageschnur 1 wird ein freies Ende 5 derselben von der Oberseite 34 des Traggriffes 3 her mit dem Klöppel 2 durch die Einführungsöffnung 41 geschoben und darauf die Tragschnur 1 in Richtung auf das Ende 8 des Traggriffes 3 hin gezogen und in die Ausnehmung 19 von der Oberseite 34 her durch die über die gesamte Länge 38 der Ausnehmung 19 reichende Einlegeöffnung 16 eingelegt.

Dabei legt sich der Klöppel 2 an die Stützkante 6 an und ist zur Oberseite 34 des Traggriffes 3 hin von den Haltekanten 9 an seiner zylindrischen Mantelfläche 15 gesichert, deren Längserstreckung 23 etwa über zwei Drittel der Länge 13 des Klöppels 2 reicht.

Die Trageschnur 1 wird zusätzlich in dem Teilbereich 10 der Ausnehmung 19 der unmittelbar an die Stützkante 6 anschließt eingeklemmt, indem die Seitenwände 30 in dem Teilbereich 10 einen Abstand 36 aufweisen, der etwas geringer ist als der Durchmesser der Trageschnur 1 an dieser Stelle.

Die Trageschnur 1 legt sich an die untere Wandung 24 der Ausnehmung 19 von oben ein, nachdem der Klöppel 2 in die Eintiefung 21 geschoben wurde und Zug auf sie ausgeübt wird.

Die Ausnehmung 19 weist eine Länge 38 auf, die einem mehrfachen des Durchmessers der Trageschnur 1 beträgt.

Am Ende 8 des Traggriffes 3 schließt an die untere Wand 24 der Ausnehmung 19 senkrecht zur Längsrichtung 18 des Traggriffes 3 an dem Ende 8 herablaufend, eine halboffene Nut 27 an, die etwa den Durchmesser der Trageschnur 1 aufweist und mit einer seitlichen Verengung 28 versehen ist, die das Herausziehen der eingelegten Trageschnur 1 erschwert.

Zwischen der Nut 27 und der unteren Wandung 24 der Ausnehmung 19 ist eine gerundete Übergangsfläche 29 angebracht über die die Tragschnur 1 läuft, ohne abgeknickt zu werden.

Beim Einlegen der Trageschnur 1 in die Nut 27 legt sich diese an die untere Wandung 24 der Ausnehmung 19 an, wodurch der Klöppel 2 in seiner Lage gegen Herausgleiten gesichert ist.

Der Traggriff 2 ist an der Unterseite 20 mit drei Einbuchtungen 32, 33 für die Handhabung versehen, von denen die zwei seitlichen Einbuchtungen 32 weniger tief hergestellt sind als die mittlere Einbuchtung 33 die symmetrisch am Traggriff 3 angebracht ist und die der Handhabung mittels eines Roboters dient.

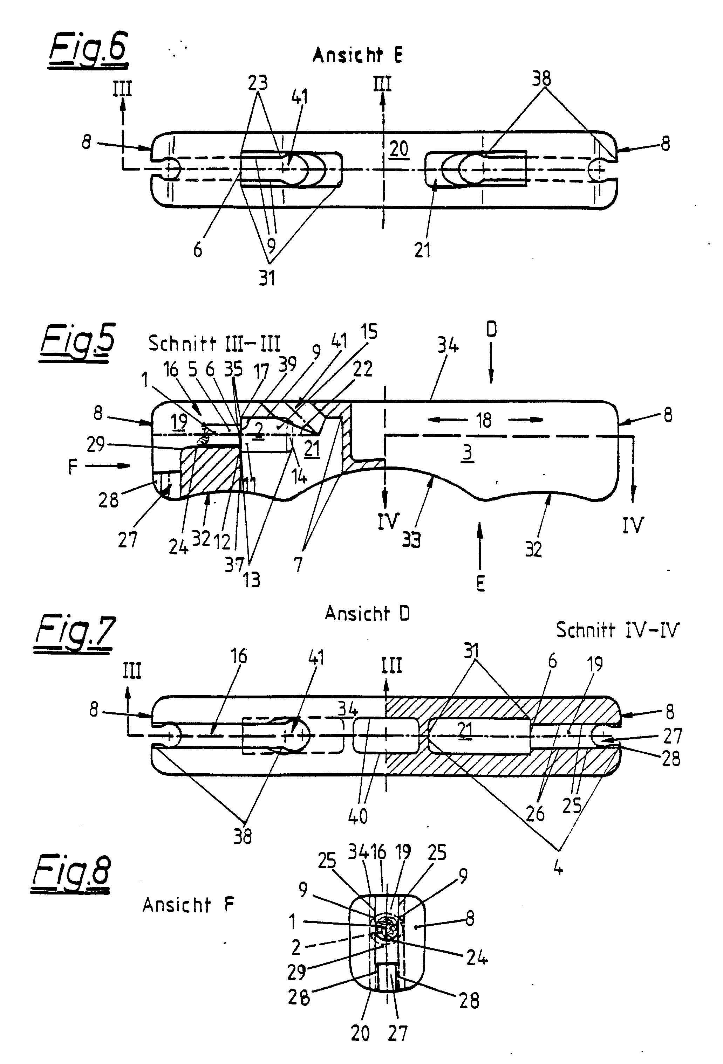

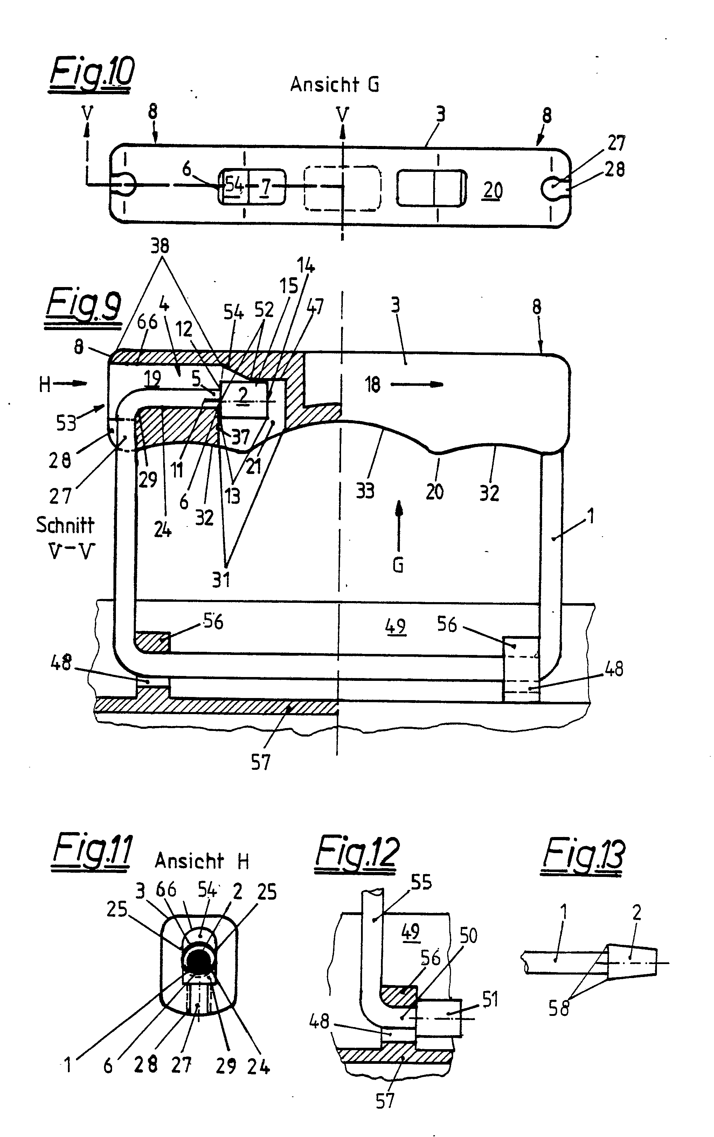

In Fig.5 bis 8 ist eine zweite der beschriebenen Ausführungsformen wiedergegeben, bei der die Eintiefung 21 und die Ausnehmung 19 von der Oberseite 34 des Traggriffes 3 her eingearbeitet sind.

Bei dieser ist, im Unterschied zu der ersten Ausführungsform, die Einführungsöffnung 41 schräg zur Längsrichtung 18 des Traggriffes 3 unter einem zum Ende 8 hin sich öffnenden Winkel 22 von etwa 45 Winkelgraden verlaufend eingearbeitet, wodurch die Einführung des Klöppels in die Eintiefung 21 wesentlich erleichtert wird.

Das Einlegen der Trageschnur 1 geschieht auch bei dieser Ausführungsform des Traggriffes 3 von dessen Oberseite 34 her durch eine Einlegeöffnung 16.

Das Einlegen des Klöppels 2 gestaltet sich bei dieser Ausführung des Traggriffes in gleicher Weise, wie dies für die erste Ausführungsform beschrieben wurde.

In allen übrigen Einzelheiten trifft die Beschreibung der ersten Ausführungsform auch auf die zweite Ausführungsform vollkommen zu.

Bei der Ausführungsform nach Fig.9 bis Fig.11, verläuft die Trageschnur 1 durch zwei Tragebohrungen 48 in den Laschen 56 eines elektrischen Batteriekasten 49, die an einer Seitenwand 57 desselben angegossen sind.

An den freien Enden 5 ist die Trageschnur 1 mit zylindrischen Klöppeln 2 versehen, die in Aufnahmen 4 eingesetzt sind, die an den beiden Enden 8 eines Traggriffes 3 eingearbeitet sind.

Die an dem linken Ende des Traggriffes 3 im Schnitt dargestellte Aufnahme 4 besteht aus einer, in Längsrichtung 18 des Traggriffes 3 verlaufenden Ausnehmung 19 mit einer zylindrischen, oberen Wandung 66 deren Durchmesser an den Durchmesser der Trageschnur 1 und einer zylindrischen unteren Wandung 24, deren Durchmesser an den Durchmesser des Klöppels 2 angepaßt ist und die mit ebenen Seitenwänden 25 verbunden sind und aus einer Eintiefung 21', die von der Unterseite 20 des Traggriffes 3 in diesen eingearbeitet ist und in die die Ausnehmung 19 mündet.

Die untere Wandung 24 der Ausnehmung 19 bildet mit der zum Ende 8 des Traggriffes hin angeordneten Wand 37 der Eintiefung 21 eine Stützkante 6 für die Endfläche 12 am inneren, der Trageschnur 1 zugewandten Ende 11 des Klöppels 2, deren Verlauf entsprechend dem Umfang der zylindrischen Mantelfläche 15 des Klöppels gerundet ist.

Die Eintiefung 21' ist innen mit einer Stützfläche 47 für das äußere Ende 14 der zylindrischen Mantefläche 15 des Klöppels 2 versehen, deren senkrechter Abstand von der Stützkante 6 etwa um

die radiale Breite der Endfläche 12 des Klöppels 2, mit der dieser sich an der Stützkante 6 abstützt, geringer ist, als der Durchmesser des Klöppels 2.

Die Eintiefung 21' weist eine Längserstreckung 31 auf, die an die Länge 13 des Klöppels 2 angepaßt ist und diese nur geringfügig überschreitet, sodaß das Einführen desselben von der Ausnehmung 19 her grade möglich ist, das Herausziehen aus der Eintiefung ohne zusätzlichen Eingriff von außen jedoch unmöglich wird.

Die Stützkante 6 und die Stützfläche 47 der Eintiefung 21' befinden sich in Längserstreckung 18 des Traggriffes 2 in einem Abstand 52 voneinander, der an die Länge 13 des Klöppels 2 angepaßt und geringer als diese ist.

Zum besseren Einfädeln des Klöppels 2 in die Aufnahme 4 ist zwischen der oberen Wandung 66 der Ausnehmung 19 und der Eintiefung 21', quer zu dieser, eine in Längsrichtung 18 gerundete Übergangsfläche 54 angeordnet.

Bei Einführen des Klöppels 2 durch die Öffnung 53 Ausnehmung 19 am Ende 8, des Traggriffes 3, stößt dieser gegen die Übergangsfläche 54 und wird nach unten zu abgelenkt, bis er schließlich vollständig in die Eintiefung 21' eingeschoben ist.

Beim Herausziehen der Trageschnur 1 bleibt der Klöppel 2 an der Stützkante 6 hängen und zwar ungeachtet der Zugrichtung der Tragschnur 1, weil die Länge 38 der Ausnehmung 19 das Herausziehen des Klöppels 2 verhindert.

Zur Absicherung der Lage des Klöppels 2 in der Eintiefung 21', bei der die Endfläche 12 des Klöppels an der Stützkante 6 zur Anlage kommt und das am Klöppel 2 auftretende Kippmoment mit sich über die zylindrische Mantelfläche 15 am äußeren Ende 14 des Klöppels 2 an der Stützfläche 47 der Eintiefung 21 abstützt, ist an der Öffnung 53 der Ausnehmung 19 senkrecht zur Längsrichtung 18 des Traggriffes 3 an dessen Ende 8 herablaufend, in gleicher Weise, wie bei den vorherbeschriebenen Ausführungsformen, eine halboffene Nut 27 etwa vom Durchmesser der Trageschnur 1 eingearbeitet, die den vorbeschriebenen vollständig in Gestalt und Eigenschaften gleicht und in Fig. 11 mit eingelegter Trageschnur dargestellt ist.

Der Tragegriff 3 entspricht in der Gestaltung für die Handhabung und deren Eigenschaften den vorherbeschriebenen Ausführungsformen der Erfindung.

Eine andere Ausführungsform der Trageschnur 1, die in Fig.12 wiedergegeben ist, besteht darin, das diese aus zwei Teilen 55 besteht, deren weitere freie Enden 50 mit einem Klöppel 51 größeren Durchmessers versehen sind, als dem Durchmesser der Tragbohrung 48 entspricht und nach dem Einfädeln der Tragschnur 1 in die Tragbohrung an der Lasche 56 festgehalten werden.

Eine besondere Form des Klöppels 2 zum leichteren Einführen in die Aufnahme 4 und zum Einfädeln durch die Tragbohrung 48 ist in Fig.13 wiedergegeben, die einen kegelstumpfförmigen Umriß zeigt, dessen Basisfläche 58 der Trageschnur 1 zugewendet ist.

Der in Fig.14 wiedergegebene Traggriff 3 entspricht im wesentlichen dem in Fig.9 dargestellten Traggriff 3 mit den im folgenden behandelten Abweichungen:

Die Ausnehmung 19 der Aufnahme 4 des Traggriffes 3 besteht aus einer oberen Wandung 66 mit einer, an den Querschnitt des Klöppels 2 angepaßten Form, die beim kreisförmigen Querschnitt desselben zylindrisch geformt ist.

Die untere Wandung 24 ist an die Form der Trageschnur 1 angepaßt, die einen geringeren Querschnitt als der Klöppel 2 und ebenfalls einen kreisförmigen Querschnitt aufweist.

Die untere Wandung 24 setzt sich nach oben in zwei ebenen, zueinander parallelen Seitenwänden 25 fort, die an der oberen Wand 66 in Kanten enden.

Unter nach unten wirkender Zugkraft legt sich die Trageschnur 1 an der unteren Wandung 24 an und der Klöppel 2 stützt sich mit seiner, am inneren, der Trageschnur 1 zugewandten Ende 11, angeordneten Endfläche 12 bis weit über seine Längsachse 63 nach oben reichend, an der Stützkante 6 ab.

Die Stützkante 6 ist zwischen der unteren Wandung 24 und der Wand 37 der Eintiefung 21' gebildet, die dem zugeordneten Ende 8 des Traggriffes 3 zugewandt ist.

An seiner zylindrischen Mantelfläche 15 wird der Klöppel 2 im Bereich des äußeren Endes 14 von der Stützfläche 47 in Längsrichtung 18 des Traggriffes 3 gerade gehalten.

Die Stützfläche 47 ist auf einer federnden Zunge 60 eines federnden Teiles 59 des Traggriffes 3 angebracht und über eine, ebenfalls auf der federnden Zunge 60 liegenden, steil zur Unterseite 20 des Traggriffes 3 hin geneigt verlaufenden Übergangsfläche 54 mit der oberen Wand 64 des Traggriffes 3, die die obere Wandung 66 der Ausnehmung 19 bildet, verbunden, die gleichzeitig ein Stück auf der federnden Zunge 60 in die Eintiefung 21' hineingezogen ist.

Die federnde Zunge 60 ist zur Ausnehmung 19 hin mit der oberen Wand 41 des Traggriffes 3 verbunden und zu beiden Seiten und an ihrem gegenüberliegenden Ende 61 freigestellt, indem die Eintiefung 21' in Form eines Schlitzes bis an die Oberseite 34 des Traggriffes 3 hindurchgeführt ist.

Die Durchtrittsöffnung 62 für den Klöppel 2, zwischen der Ausnehmung 19 und der Eintiefung 21', besitzt einen etwas kleineren Abstand zwischen der zylindrischen unteren Wandung 24 der Ausnehmung 19 und der Übergangsfläche 54 der federnden Zunge 60 an der Eintiefung 21, quer zur Längsrichtung 18 des Traggriffes 3, als dem Durchmesser des Klöppels 2 entspricht, wodurch beim Hineinschieben des Klöppels 2 die federnde Zunge 60 nach oben weggedrückt wird.

Sobald sich der Klöppel 2 in der Eintiefung 21 befindet, federt die Zunge 60 wieder in ihre Ausgangslage zurück und drängt den Klöppel 2 nach unten, so daß sich nach dem Anlegen der Trage schnur 1 an die untere Wandung 24, unter der Wirkung einer auf die Trageschnur wirkenden Zugkraft, der Klöppel 2 an der Stützkante 6 über einen grossen Teil seiner Endfläche 12 bis weit über seine Längsachse 63 nach oben reichend verriegelt und von der Stützfläche 54 gehalten ist.

Die Ausbildung der am Ende des Traggriffes 3 angebrachten, herablaufenden Nut 27 und die Gestaltung des Traggriffes 3 für die Handhabung desselben entspricht in Form und Eigenschaften den vorher beschriebenen Ausführungsbeispielen der Erfindung.

Das freie Ende 5 einer Trageschnur 1 ist mit einem zylindrischen Klöppel 2 versehen, in eine Aufnahmen 4 eines Traggriffes 3 eingesetzt, die an einem Ende 8 eines Traggriffes 3 eingearbeitet ist. In Fig.10 sind die beiden Aufnahmen 4 an beiden Enden 8 des Traggriffes dargestellt.

Die an dem linken Ende des Traggriffes 3 im Schnitt dargestellte, von der Oberseite 34 des Traggriffes 3 her eingearbeitete Aufnahme 4 besteht aus einer, in Längsrichtung 18 des Traggriffes 3 verlaufenden Ausnehmung 19 mit einer zylindrischen unteren Wandung 24, deren Durchmesser an den Durchmesser der Trageschnur 1 angepaßt ist und seitlich anschließenden, parallelen, ebenen Seitenwänden 25 in einem Abstand 26 entsprechend dem Durchmesser der Trageschnur 1 und aus einer Eintiefung 21 für den Klöppel 2, die in die Ausnehmung 19 mündet.

Die untere Wandung 24 und die ebenen Seitenwände 25 der Ausnehmung 19 bilden mit der zum Ende 8 des Traggriffes hin zwischen den Seitenwänden 40 angeordeneten Wand 37 der Eintiefung 21 eine Stützkante 6 für die Endfläche 12 am inneren, der Tragschnur 1 zugewandten Ende 11 des Klöppels 2, die entsprechend der zylindrischen Mantelfläche 15 kreisförmige Gestalt besitzt.

Die Stützkante 6 verläuft von der unteren Wandung 24' bis zum Ende der Eintiefung 21 an der Oberseite 34 des Traggriffes 3, wobei der Abstand zwischen der tiefsten Stelle der Stützkante 6 und der Oberseite 34 des Traggriffes 3 den Durchmesser des Klöppels 2 wesentlich, vorzugsweise um nahezu das Doppelte, übersteigt.

Die Eintiefung 21 weist eine Längserstreckung 31 auf, die an die Länge 13 des Klöppels 2 ange

paßt ist und diese nur geringfügig überschreitet, sodaß das äußere Ende 14 des Klöppels 2 die gegenüberliegende Wand der Eintiefung 21 beinahe berührt und das Einführen desselben von der Oberseite 34 her gerade möglich ist, das Herausziehen aus der Eintiefung ohne zusätzlichen Eingriff von außen jedoch unmöglich wird.

Beim Einführen der Trageschnur 1 wird diese mit dem Klöppel 2 durch eine Durchführung 65 geschoben, die vom Ende 8 des Traggriffes 3 schräg nach oben und nach innen zu verläuft und an der Oberseite 34 des Traggriffes 3 mit einer oberen Öffnung 46 endet und deren Durchmesser dem Durchmesser des Klöppels 2 angepaßt ist.

Die Durchführung 65 ist dabei so angeordnet, daß am Ende 8 des Traggriffes 3 ein Steg 42 und an der Ausnehmung 19 zwischen der Durchführung 65 und der Eintiefung 21 Zwischenstege 69 mit ausreichender Stärke vorhanden sind.

Die Trageschnur 1 legt sich an die untere Wandung 24 der Ausnehmung 19 von oben ein, wenn der Klöppel 2 in die Eintiefung 21 geschoben wird und auf die Trageschnur 1 Zug ausgeübt wird.

Die untere Wandung 24 der Ausnehmung 19 ist auf einen Steg 67 an der Eintiefung 21 und einem weiteren Steg 68 am Ende 8 des Traggriffes 3 beschränkt, zwischen denen sich eine Freistellung 70 befindet.

Die Ausnehmung 19 weist eine Länge 38 auf, die einem mehrfachen des Durchmessers der Trageschnur 1 beträgt, sodaß auch dadurch ein unbeabsichtigtes öffnen der Verbindung unmöglich gemacht ist.

Damit ein unbeabsichtigtes Lösen der Verbindung vermieden wird, ist die Durchführung 65 so angeordnet, daß die Öffnung 43 am Ende 8 des Traggriffes 3 mit ihrer obersten Stelle gleichzeitig die obere Begrenzung 44 der Ausnehmung 19 für die Trageschnur 1 bildet und einen senkrechten Abstand 45 zu der tiefsten Stelle der unteren Wandung 24 aufweist, der dem Durchmesser der Trageschnur 1 entspricht.

Am Ende 8 des Traggriffes 3 schließt an die untere Wand 24 der Ausnehmung 19 senkrecht zur Längsrichtung 18 des Traggriffes 3 an dem Ende 8 herablaufend, eine halboffene Nut 27 etwa vom Durchmesser der Trageschnur 1 eingearbeitet an, die ebenso wie die Gestaltung des Traggriffes 3 für die Handhabung desselben, den vorherbeschriebenen Ausführungsformen gleicht und die gleichen Eigenschaften aufweist.


### Verzeichnis der Bezugszeichen.

1 Trageschnur
2 Klöppel

3 Traggriff

4 Aufnahme des Traggriffes 3

5 freies Ende der Trageschnur 1

6 Stützkante der Aufnahme 4

7 Quererstreckung der Eintiefung 21

8 Ende des Traggriffes 3

9 Haltekante

10 Teilbereich der Ausnehmung 19 an der Stützkante 6

11 inneres Ende des Klöppels 2

12 Endfläche des Klöppels 2, der Trageschnur 1 zugewendet

13 Länge des Klöppels 2

14 äußeres Ende des Klöppels 2

15 zylindrische Mantelfläche des Klöppels 2

16 Einlegeöffnung für die Trageschnur 1 der Ausnehmung 19

17 Ende der Stützkante 6

18 Längsrichtung des Traggriffes 2

19 Ausnehmung der Aufnahme 4

20 Unterseite des Traggriffes 3

21 Eintiefung der Aufnahme 4 von der Oberseite 34 des Traggriffes 3

21' Eintiefung der Aufnahme 4 von der Unterseite 34 des Traggriffes 3

22 Winkel zwischen der Einführungsöffnung 41 und der Längsrichtung

23 Längserstreckung der Haltekante 9 senkrecht zur Längsrichtung 18 des Traggriffes 3

24 untere Wandung der Ausnehmung 19

25 ebene Seitenwand der Ausnehmung 19

26 Abstand der beiden ebenen Seitenwände 25

27 halboffene Nut des Traggriffes 3

28 Verengung der Nut 27

29 Übergangsfläche zwischen Ausnehmung 19 und Nut 27

30 ebene Seitenwand des Teilbereiches 10 der Ausnehmung 19

31 Längserstreckung der Eintiefung 21

32 seitliche Einbuchtungen des Traggriffes 3

33 mittlere Einbuchtung des Traggriffes 3

34 Oberseite des Traggriffes 3

35 Abstand zwischen der tiefsten Stelle der Stützkante 6 und deren Enden 17

36 Abstand der beiden ebenen Seitenwände 30

37 Wand der Eintiefung 21, dem Ende 8 zugewandt

38 Länge der Ausnehmung 19

39 Winkel zwischen der Haltekante 9 und der Stützkante 6

40 Seitenwand der Eintiefung 21

41 Einführungsöffnung der Eintiefung 21

42 Steg am Ende 8 des Traggriffes 3

43 Öffnung der Durchführung 65 am Ende 8 des Traggriffes 3

44 Obere Begranzung der Ausnehmung 19 an der obersten Stelle der Öffnung 43 am Ende 8 des Traggriffes 3

45 Abstand zwischen der oberen Begrenzung 44 und der tiefsten Stelle der unteren Wandung 24 der Ausnehmung 19

46 obere Öffnung der Durchführung 65

47 Stützfläche der Aufnahme 4

48 Tragbohrung eines schweren Behälters 49

49 schwerer Behälter, elektrischer Batteriekasten

50 weiteres freies Ende der geteilten Trageschnur

51 Klöppel größeren Durchmessers

52 Abstand zwischen Stützkante 6 und Stützfläche 47 der Aufnahme 4

53 Öffnung der Ausnehmung 19 am Ende 8 des Traggriffes 3

54 Übergangsfläche zwischen Ausnehmung 19 und Eintiefung 21, quer zur Längsrichtung 18 gerundet

55 Teil der geteilten Trageschnur 1

56 Lasche mit Tragbohrung 9

57 Seitenwand des elektrischen Batteriekastens 10

58 Basisfläche des kegelstumpfförmigen Klöppels 2

59 federndes Teil des Traggriffes 3

60 federnde Zunge

61 freies Ende der federnden Zunge 43

62 Durchtrittsöffnung für den Klöppel 2

63 Längsachse des Klöppels 2

64 obere Wand des Traggriffes 3

65 Durchführung

66 zylindrische obere Wandung der Ausnehmung 19

67 Steg der unteren Wandung 24 an der Eintiefung 21

68 Steg der unteren Wandung 24 am Ende 8 des Traggriffes 3

69 Zwischensteg zwischen der oberen Öffnung 46 der Durchführung 65 und der Wand 37 der Eintiefung 21

70 Freistellung zwischen den Stegen 67 und 68

**Ansprüche**

1. Trageschnur (1) mit Traggriff (3), für schwere Behälter (49), wie elektrische Batteriekästen, die an ihren gegenüberliegenden Seiten mit je wenigstens einer Tragbohrung (48) versehen sind, durch die die Trageschnur (1), mit einem Klöppel (2) als Verdickung an wenigstens einem freien Ende (5) versehen, hindurchgeführt ist, der zur Befestigung in einer Aufnahme (4) des Traggriffes (3), unter Bildung einer, zumindestens während der Ausübung einer Zugkraft auf die Trageschnur (1), gegen Öffnen gesicherten Tragschlaufe eingelegt ist, **dadurch gekennzeichnet,** daß die aus einer Eintiefung (21, 21') für den Klöppel (2), deren Längserstrekkung (31) mindestens der Länge (13) des Klöppels (2) entspricht und aus einer in Längsrichtung (18) des Traggriffes (3) an diese anschließende Ausnehmung (19) für die Trageschnur (1) besteht, zwischen denen eine Stützkante (6) für den Klöppel gebildet ist, wobei die Stützkante (6) quer zur Längsrichtung (18) des Traggriffes (3) verlaufend, von deren tiefster Stelle bis zu ihren Enden (17) wenigstens den Durchmesser des Klöppels (2) überschreitend oder zusammen mit wenigstens einer weiteren Stützkante oder Haltekante (9) oder Stützfläche (47), die Befestigung des Klöppels (2) in der Aufnahme (4) gegen Öffnen sichert.

2. Trageschnur mit Traggriff, nach dem vorhergehenden Anspruch, **dadurch gekennzeichnet,** daß die Stützkante (6) senkrecht zur Längsrichtung (18) des Traggriffes (3) verläuft.

3. Trageschnur mit Traggriff, nach einem der vorhergehenden Ansprüche, **dadurch gekennzeichnet,** daß die Stützkante (6) seitlich über den Durchmesser des Klöppels (2) bis an die Oberseite (34) des Traggriffes (3) reicht.

4. Trageschnur mit Traggriff, nach Anspruch 1, **dadurch gekennzeichnet,** daß die Eintiefung (21, 21') der Ausnehmung (4) eine Längserstreckung (31) aufweist, die größer ist als die Länge (13) des Klöppels (2) und von der Unterseite (20) oder von der Oberseite (34) des Traggriffes (3) her eingearbeitet ist.

5. Trageschnur mit Traggriff, nach einem der Ansprüche 1 oder 4, **dadurch gekennzeichnet,** daß die Quererstreckung (7) der Eintiefung (21, 21') zur Längsrichtung (18) des Traggriffes (3) größer ist als die Länge (13) des Klöppels (2).

6. Trageschnur mit Traggriff, nach Anspruch 1, **dadurch gekennzeichnet,** daß die Ausnehmung (19) der Ausnahme (4) an die Form der Trageschnur (1) angepaßt ist und eine Länge (38) aufweist, die dem mehrfachen des Durchmessers der Trageschnur (1) entspricht und eine Abweichung von der Längsrichtung des Traggriffes (3) begrenzt und eine zylindrische, untere Wandung (24), die an die Form der Trageschnur und ebene Seitenwandungen (25) aufweist, deren Abstand (26) dem Durchmesser der Trageschnur (1) angepaßt ist.

7. Trageschnur mit Traggriff, nach einem der Ansprüche 1, 4 oder 6, **dadurch gekennzeichnet,** daß die untere Wandung (24) der Ausnehmung (19) auf zwei Stege (67 und 68) an der Eintiefung (21, 21') und an der Nut (27), mit einer Freistellung dazwischen beschränkt ist.

8. Trageschnur mit Traggriff, nach einem der Ansprüche 1, 4, 6 oder 7, **dadurch gekennzeichnet,** daß die Ausnehmung (19) mit einer schräg zur Längsrichtung (18) des Traggriffes (3) verlaufenden, quer zur Längsrichtung (18) gerundeten Übergangsfläche (54) in die Eintiefung (21, 21) mündet.

9. Trageschnur mit Traggriff, nach Anspruch 7, **dadurch gekennzeichnet,** daß die untere Wandung (24) und die ebenen Seitenwandungen (25) der Ausnehmung (19) mit der zur ihr hin angeordneten Wand (37) der Eintiefung (21, 21') die Stützkante (6) für den Klöppel (2) bilden.

10. Trageschnur mit Traggriff, nach einem der Ansprüche 1, 2, 3 oder 9, **dadurch gekennzeichnet,** daß sich an die Enden (17) der Stützkante (6) Haltekanten (9) für die Mantelfläche (15) des Klöppels (2) im wesentlichen in Längsrichtung (18) verlaufend anschließen, die bis zu einer Einführungsöffnung (41) für den Klöppel (2) reichen, die in die Eintiefung (21) der Aufnahme (4) des Traggriffes (3) bis zur Oberseite (34) des Traggriffes (3) eingearbeitet ist und an die in Richtung auf das zugeordnete, stirnseitige Ende (8) des Traggriffes (3) eine Einlegeöffnung (16) für die Trageschnur (1) von der Oberseite (34) des Traggriffes her eingearbeitet, anschließt.

11. Trageschnur mit Traggriff, nach Anspruch 10, **dadurch gekennzeichnet,** daß die Einführungsöffnung (41) an die Haltekanten (9) anschließt.

12. Trageschnur mit Traggriff, nach Anspruch 10 oder 11, **dadurch gekennzeichnet,** daß die Einführungsöffnung (41) für den Klöppel (2) in die Eintiefung (21) unter einem sich zum zugewandten Ende (8) des Traggriffes (3) öffnenden Winkel (22) von der Oberseite (34) des Traggriffes (3) her, von zwischen 30 bis einschließlich 90 Winkelgraden zur Längsrichtung (18) des Traggriffes (3) verlaufend angeordnet ist.

13. Trageschnur mit Traggriff, nach Anspruch 10 oder 11, **dadurch gekennzeichnet,** daß die Haltekanten (9) mit der Stützkante (6) Winkel (39) einschließen, die dem Winkel zwischen der Endfläche (12) am inneren Ende (11) des Klöppels (2) und der Erzeugenden der Mantelfläche des Klöppels (2) entsprechen, und bei einer zylindrischen Mantelfläche (15) 90 Winkelgrade betragen.

14. Trageschnur mit Traggriff, nach einem der Ansprüche 10, 11 oder 13, **dadurch gekennzeichnet,** daß die Längserstreckung (23) der Haltekanten (9) zumindestens einem Drittel und vorzugsweise der gesamten Länge (13) des Klöppels (2) entspricht.

15. Trageschnur mit Traggriff, nach einem der Ansprüche 1, 4 oder 6 bis 9, **dadurch gekennzeichnet,** daß die Ausnehmung (19) über einen Teilbereich (10) an der Stützkante (6) beginnend, ebene Seitenwände (30) aufweist, die einen etwas geringeren Abstand (36) aufweisen als dem Durchmesser der Trageschnur (1) entspricht, damit nach deren Einlegen in die Ausnehmung (19) die Trageschnur (1) in dem Teilbereich (10) eingeklemmt ist.

16. Trageschnur mit Traggriff, nach einem der Ansprüche 1, 4, 6 bis 9 oder 15, **dadurch gekennzeichnet**, daß die Ausnehmung (19) am Ende (8) des Traggriffes (3) in eine senkrecht zu dessen Längsrichtung (18) eingearbeitete, herablaufende, halboffene Nut (27) für die Aufnahme der nach unten umgelenkten Trageschnur (1) übergeht, die mit einer seitlichen Verengung (28) die eingelegte Trageschnur (1) gegen Herausgleiten sichert.

17. Trageschnur mit Traggriff, nach dem vorhergehenden Anspruch, **dadurch gekennzeichnet**, daß eine Übergangsfläche (29) zwischen Ausnehmung (19) und Nut (27) angebracht und an die Trageschnur (1) angepaßt gerundet und vorzugsweise gezahnt ist.

18. Trageschnur mit Traggriff, nach Anspruch 1, 6 oder 15 bis 17, **dadurch gekennzeichnet**, daß die Trageschnur (1) in der Ausnehmung (19) an den unteren Wandung (24) und an der Übergangsfläche (29), zwischen der Ausnehmung (19) und der Nut (27) unter einer Zugkraft insbesondere der Gewichtskraft eines schweren Behälters enganliegend entlang und in der Nut (27) geführt ist.

19. Trageschnur mit Traggriff, nach Anspruch 1, 2 bis 5, 9, 10 oder 12 bis 14, **dadurch gekennzeichnet**, daß der Klöppel (2) in der Eintiefung (21) der Aufnahme (4) entweder von wenigstens zwei beabstandeten Stützkanten (6) oder zwei beabstandeten Stützflächen (47) oder von wenigstens einer Stützkante (6) und einer Stützfläche (47), die voneinander beabstandet sind, durch Abstützung einer, auf die Trageschnur (1) ausgeübten Zugkraft und des dadurch am Klöppel (2) auftretenden Kippmomentes, gegen Öffnen gesichert gehalten sind.

20. Trageschnur mit Traggriff, nach Anspruch 19, **dadurch gekennzeichnet**, daß der Klöppel (2) sich mit der Enfläche (12) am innneren Ende (11), das der Trageschnur (1) zugewendet ist, an der Stützkante (6) im wesentlichen die Zugkraft der Trageschnur (1) und mit dem äußeren Ende (14) der, vorzugsweise zylindrischen Mantelfläche (15), an der Stützfläche (47) der Aufnahme (4) im wesentlichen das Kippmoment abstützt.

21. Trageschnur mit Traggriff, nach einem der Ansprüche 1, 4, 6, 19 oder 20, **dadurch gekennzeichnet**, daß die Aufnahme (4) eine am Ende (8) des Traggriffes (3) ansetzende, in Längsrichtung (18) desselben verlaufende Ausnehmung (19) aufweist, die in eine von der Unterseite (20) des Traggriffes (3) her ausgesparte Eintiefung (21´) mündet.

22. Trageschnur mit Traggriff, nach dem vorhergehenden Anspruch, **dadurch gekennzeichnet**, daß die Ausnehmung (19) eine an die Form des Klöppels (2) angepaßte, vorzugsweise zylindrische, obere Wandung (64) aufweist, an die eine an der Form der Trageschnur (1) angepaßte, vorzugsweise zylindrische, untere Wandung (24) anschließt.

23. Trageschnur mit Traggriff, nach einem der beiden vorhergehenden Ansprüche, **dadurch gekennzeichnet**, daß an die untere Wandung (24) die ebenen Seitenwandungen (25) parallel ausgerichtet anschließen, die bis zur oberen Wandung (64) reichen und deren Höhe, senkrecht zur Längsrichtung (18), vorzugsweise nahezu dem Halbmesser des Klöppels (2) entspricht.

24. Trageschnur mit Traggriff, nach Anspruch 1 oder 20, **dadurch gekennzeichnet**, daß die tiefste Stelle der Stützkante (6) und die Stützfläche (47) in der Aufnahme (4) in einem Abstand (52) voneinander angeordnet sind, der den Abmessungen des Klöppels (2) in dessen Längsrichtung zumindestens entspricht.

25. Trageschnur mit Traggriff, nach dem vorhergehenden Anspruch, **dadurch gekennzeichnet**, daß der Abstand zwischen der Stützkante (6) und der Stützfläche (47), senkrecht zur Längsrichtung (18) des Traggriffes (3), im wesentlichen wenigstens um die radial zum Durchmesser des Klöppels (2) gemessene Breite, des als Abstützung dienenden Teils der Endfläche (12) am inneren Ende (11) des Klöppels (2) geringer ist als der Durchmesser des Klöppels (2).

26. Trageschnur mit Traggriff, nach einem der beiden vorhergehenden Ansprüche, **dadurch gekennzeichnet**, daß die Eintiefung (21´) innen mit der Stützfläche (47) für das äußere Ende (14) des Klöppels (2) versehen ist.

27. Trageschnur mit Traggriff, nach einem der drei vorhergehenden Ansprüche, **dadurch gekennzeichnet**, daß die Stützfläche (47) an einem quer zur Längsrichtung (18) des Traggriffes (3), nach oben federnd bewegbaren Teil (59) angebracht ist und zwischen diesem und der Ausnehmung (19) eine Durchtrittsöffnung (62) für den Klöppel (2) vorgesehen ist, die quer zur Längsrichtung (18) des Traggriffes (3) verläuft.

28. Trageschnur mit Traggriff, nach einem der vier vorhergehenden Ansprüche, **dadurch gekennzeichnet**, daß die Stützfläche (47) und die Übergangsfläche (54) an dem quer zur Längsrichtung (18) federnd bewegbaren Teil (59) angebracht ist.

29. Trageschnur mit Traggriff, nach einem der vorhergehenden Ansprüche, **dadurch gekennzeichnet**, daß die Eintiefung (21´) quer zur Längsrichtung (18) durch den Traggriff (3) bis an dessen Oberseite hindurchreicht, wobei die obere Wandung (64) eine federnde Zunge (60) bildet, welche die Stützfläche (47) und die Übergangsfläche (54) trägt.

30. Trageschnur mit Traggriff, nach dem vorhergehenden Anspruch, **dadurch gekennzeichnet**, daß die federnde Zunge (60) zum Ende (8) des Traggriffes (3) hin mit dessen oberer Wandung (64) verbunden, seitlich im wesentlichen bis zu der, zum Ende (8) des Traggriffes (3) hin liegenden Wand (37) der Eintiefung (21') und and ihrem gegenüberliegenden, freien Ende (61) freigestellt ist.

31. Trageschnur mit Traggriff, nach einem der beiden vorhergehenden Ansprüche, **dadurch gekennzeichnet**, daß in die Eintiefung (21) die obere Wandung (64) hineinreicht, an die die Übergangsfläche (54), vorzugsweise gerundet und steil zur Unterseite (20) des Traggriffes (3) gerichtet anschließt.

32. Trageschnur mit Traggriff, nach einem der vorhergehenden Ansprüche, bei dem eine quer zur Längsrichtung (18) des Traggriffes (3) verlaufende Durchführung (65) in einer Aufnahme (4) des Traggriffes (3), angebracht ist, **dadurch gekennzeichnet**, daß der senkrechte Abstand zwischen der tiefsten Stelle der Ausnehmung (19) und der oberen Begrenzung (44) der Öffnung (43) der Durchführung (65) am Ende (8) des Traggriffes (3) den Durchmesser der Trageschnur (1) nicht überschreitet, und die Länge (38) der Ausnehmung (19), über die die Trageschnur (1) an der unteren Wandung (24) der Ausnehmung (4) anliegt, wenigstens einem Mehrfachen des Durchmessers der Trageschnur (1) entspricht, wodurch die Befestigung des Klöppels (2) in der Aufnahme (4), bei Abstützung einer auf die Trageschnur(1) ausgeübten Zugkraft gegen unbeabsichtigtes Öffnen gesichert ist.

33. Trageschnur mit Traggriff, nach Anspruch 1 oder 32, **dadurch gekennzeichnet**, daß die Eintiefung (21) von der Oberseite (34) des Traggriffes (3) her eingearbeitet ist.

34. Trageschnur mit Traggriff, nach Anspruch 32, **dadurch gekennzeichnet**, daß die Durchführung (65) für eine Aufnahme (4) vom Ende (8) des Traggriffes (3) her schräg nach innen zu an die Oberseite (34) hindurchgeführt ist und dort und am Ende (8) mit den Öffnungen (46 und 43) endet und einen kreisförmigen Querschnitt aufweist, dessen Durchmesser wenigstens dem Durchmesser des Klöppels (2) entspricht.

35. Trageschnur mit Traggriff, nach Anspruch 32 oder 34, **dadurch gekennzeichnet**, daß die Durchführung am Ende (8) des Traggriffes (3) mit der Öffnung (43) ansetzt, bei der die oberste Stelle gleichzeitig die obere Begrenzung (44) für die Ausnehmung (19) bildet.

36. Trageschnur mit Traggriff, nach einem der Ansprüche 32, 34 oder 35, **dadurch gekennzeichnet**, daß die Durchführung (65) eine Lage im Traggriff (3) einnimmt, der sowohl die Stützkante (6) als auch die Übergangsfläche (29) zwischen der Ausnehmung (19) und der Nut (27) des Traggriffes (3) nicht berührt und den Steg (42) am Ende (8) und die Zwischenstege (69) an den Seitenwandungen (25) der Ausnehmung (19) einen möglichst großen Querschnitt aufweisen.

37. Trageschnur mit Traggriff, nach einem der vorhergehenden Ansprüche, **dadurch gekennzeichnet**, daß die Trageschnur (1) zwei freie Enden (5) aufweist, die beide mit je einem Klöppel (2) zum Einführen in je eine Aufnahme (4) in den beiden Enden (8) des Traggriffes (3) versehen sind.

38. Trageschnur mit Traggriff, nach einem der vorhergehenden Ansprüche, **dadurch gekennzeichnet**, daß der Traggriff (3) an seiner Unterseite (20) in Längsrichtung (18) aufeinander folgend, mehrere, vorzugsweise kreisbogenförmig geformte Einbuchtungen (32, 33) aufweist, wobei die mittlere Einbuchtung (33) symmetrisch zu den Aufnahmen (4) des Traggriffes (3) angeordnet und vorzugsweise tiefer ist als die beiden Seitlichen und als Angriffsstelle für einen Montageroboter vorgesehen ist.

39. Trageschnur mit Traggriff, nach dem vorhergehenden Anspruch, **dadurch gekennzeichnet**, daß der Traggriff (3) aus thermoplastischem Material besteht und in einem Arbeitsgang zusamen mit den Klöppeln (2) hergestellt wird.

40. Trageschnur mit Traggriff, nach einem der vorhergehenden Ansprüche, **dadurch gekennzeichnet**, daß der Klöppel (2) zumindestens an seinem inneren Ende (11), das zur Trageschnur (1) hingewendet ist, mit einer kreisringförmigen Endfläche (12) versehen ist und eine rohrförmige Gestalt aufweist, deren Länge (13) deren Durchmesser übersteigt.

41. Trageschnur mit Traggriff, nach einem der vorhergehenden Ansprüche, **dadurch gekennzeichnet**, daß der Klöppel (2) einen kegelstumpfförmigen Umriß aufweist, dessen Basis der Trageschnur (1) zugewendet ist.

42. Trageschnur mit Traggriff, nach einem der vorhergehenden Ansprüche, **dadurch gekennzeichnet**, daß der Klöppel (2) sich mit der Endfläche (12) am innneren Ende (11), das der Trageschnur (1) zugewendet ist, an der Stützkante (6), die seitlich wenigstens über den Durchmesser des Klöppels (2) reicht, gegen die Zugkraft der Trageschnur (1) abstützt.

43. Trageschnur mit Traggriff, nach einem der vorhergehenden Ansprüche, **dadurch gekennzeichnet**, daß die Trageschnur (1) durch wenigstens zwei Tragbohrungen (48) eines schweren Behälters (49) hindurchgeführbar ist, die waagerecht voneinander beabstandet angeordnet sind.

44. Trageschnur mit Traggriff, nach einem der vorhergehenden Ansprüche, **dadurch gekennzeichnet**, daß die Trageschnur (1) aus geflochtenen Kunststoffasern, vorzugsweise aus Polypropylen besteht, dessen freie Enden (5) mit Klöppeln (2) aus thermoplastischem Material umspritzt sind.

45. Trageschnur mit Traggriff, nach einem der vorhergehenden Ansprüche, **dadurch gekennzeichnet**, daß je eine Trageschnur (1) an zwei gegenüberliegenden Seiten eines schweren Behälters (49) bzw. eines elektrischen Batteriekastens (10) durch je zwei Tragebohrungen (9) hindurchgezogen sind und mit mehreren Klöppeln (2) paarweise in den beiderseits angebrachten Aufnahmen (4) der Traggriffe (3) mit diesen gekoppelt und gegen Öffnung unter Zugkraft gesichert sind, wodurch sie dem elektrischen Batteriekasten eine heb- und tragbare Einheit bilden.

46. Trageschnur mit Traggriff, nach einem der vorhergehenden Ansprüche, **dadurch gekennzeichnet**, daß bei geteilter Trageschnur (1) diese zwei weitere freie Enden (50) aufweist, an denen Verstärkungen als Klöppel (51), vorzugsweise größeren Durchmessers, angebracht sind, deren Durchmesser den Durchmesser der Tragbohrung (48) des schweren Behälters (49) übersteigt und an dieser festgehalten wird.

47. Trageschnur mit Traggriff, nach einem der vorhergehenden Ansprüche, **dadurch gekennzeichnet**, daß jeweils durch jede der zwei Tragbohrungen (48) zweier, gegenüberliegender Seiten eines elektrischen Batteriekasten ein Teil (55) der geteilten Trageschnur (1) hindurchgezogen und mit dem Klöppel (51) größeren Durchmessers festegehalten ist, wobei die Trageschnur (1) mit den die klöppeltragenden freien Enden (5) in den beiderseits angebrachten Aufnahmen (4) der Traggriffe (3) mit diesen gekoppelt und gegen Öffnen unter Zugkraft gesichert sind und mit dem schweren Behälter (49) bzw. dem elektrischen Batteriekasten eine heb- und tragbare Einheit bilden.

_Fig.2_

Ansicht A

_Fig.1_

Schnitt I – I

_Fig.3_

Ansicht B

Schnitt II – II

_Fig.4_

Ansicht C

_Fig.6_     Ansicht E

_Fig.5_     Schnitt III–III

_Fig.7_     Ansicht D     Schnitt IV–IV

_Fig.8_     Ansicht F

_Fig.10_    Ansicht G

_Fig.9_

_Fig.11_    Ansicht H

_Fig.12_

_Fig.13_

EP 0 355 854 A1

Fig.15

Ansicht J

Fig.14

Schnitt III–III

Fig.16

Ansicht K

Fig.17

Ansicht L

Fig.19

Ansicht M

Fig.18

Fig.20

Ansicht N

| | EINSCHLÄGIGE DOKUMENTE | | EP 89115818.0 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 4 013 819 (GRABB) * Fig. 1 * | 1,37 | H 01 M 2/10 //B 65 D 25/22 |
| D,A | DE - B2 - 2 716 293 (VARTA) * Fig. 3 * | 1,37 | |
| A | US - A - 4 374 188 (CAMPBELL et al.) * Fig. 2 * | 1 | |
| P,A | US - A - 4 791 702 (MC VEY) * Fig. 1,2 * | 1 | |

| RECHERCHIERTE SACHGEBIETE (Int. Cl.4) |
|---|
| H 01 M |

Der vorliegende Recherchenbericht wurde für alle Patentansprüche erstellt.

| Recherchenort | Abschlußdatum der Recherche | Prüfer |
|---|---|---|
| WIEN | 10-11-1989 | LUX |